# EUROPÄISCHE PATENTSCHRIFT

(11) **EP 0 767 703 B1**
(45) Veröffentlichungstag und Bekanntmachung des Hinweises auf die Patenterteilung: **25.08.1999**
(21) Anmeldenummer: 95924894.9
(22) Anmeldetag: 21.06.1995
(51) Int. Cl.: B01J 2/16

(54) **VERFAHREN ZUM HERSTELLEN VON GRANULATEN IN EINER WIRBELSCHICHT UND VORRICHTUNG ZUM DURCHFÜHREN DES VERFAHRENS**
PROCESS AND DEVICE FOR PRODUCING GRANULATES IN A FLUIDISED BED
PROCEDE ET DISPOSITIF DE PRODUCTION DE GRANULES DANS UN LIT FLUIDISE

(30) Priorität: 28.06.1994 DE 4422607
(43) Veröffentlichungstag der Anmeldung: 16.04.1997
(73) Patentinhaber: Henkel Kommanditgesellschaft auf Aktien, 40191 Düsseldorf (DE)
(72) Erfinder: BAUER, Volker, D-40589 Düsseldorf (DE); BLOCHWITZ, Olaf, D-39307 Genthin (DE); SYLDATH, Andreas, D-40789 Monheim (DE)
(86) Internationale Anmeldenummer: EP9502407
(87) Internationale Veröffentlichungsnummer: WO9600611

(56) Entgegenhaltungen:
- DD-C- 124 008
- DE-A- 3 424 841

## Beschreibung

Die Erfindung betrifft ein Verfahren zum Herstellen von bei erhöhter Temperatur zur Klebrigkeit neigenden Granulaten, insbesondere von wasch- und reinigungsaktiven Tensidgranulaten, aus einer unter Normalbedingungen flüssigen bis pastösen Zubereitungsform durch gleichzeitiges Granulieren und Trocknen in einer von einem Trocknungsgas erhöhter Temperatur von unten angeströmten Wirbelschicht, die sich im oberen Teil einer durch einen Anströmboden zweigeteilten Wirbelschichtkammer befindet. Dabei trägt man das Granulat durch ein durch den unteren Teil der Wirbelschichtkammer geführtes Fallrohr aus der Wirbelschicht aus.

Eine Vielzahl von Verfahren zum gleichzeitigen Granulieren und Trocknen flüssiger bis pastöser Zubereitungsformen in einer Wirbelschicht ist bekannt. Viele dieser Verfahren werden in einer Wirbelschichtkammer durchgeführt, die durch einen sogenannten Anströmboden in einen oberen Teil und einen unteren Teil aufgeteilt wird. Das Trocknungsgas, das in der Regel aus erhitzter Luft besteht, strömt von unten durch den Anströmboden und hält das oberhalb des Anströmbodens befindliche Wirbelbett in seinem fluidisierten Zustand. In einer großen Anzahl von Fällen wird das zu trocknende und zu granulierende Gut an der einen Seite des Anströmbodens aufgegeben und am anderen Ende ausgetragen.

Die Gestaltung und Dimensionierung des Anströmbodens ist für den störungsfreien Betrieb von großer Bedeutung, denn der Anströmboden beeinflußt die Partikelbewegung und den Wärme- und Stoffübergang in der Schicht. Mit bestimmten Ausgestaltungen des Anströmbodens soll ein definierter Partikelumlauf innerhalb der Wirbelschicht erzielt werden. So ist ein Anströmboden mit nasenlochartigen Luftaustritten bekannt. In einem anderen Verfahren wird zum Erzielen eines definierten Partikelumlaufs die Wirbelschicht ungleichmäßig belüftet. Dazu dient eine unterschiedliche Perforierung des Bodens.

So wird in der DD 119 304 ein Anströmboden für einen kreisförmig ausgebildeten Wirbelschichtapparat vorgeschlagen, in dem in Abhängigkeit vom Radius eine unterschiedliche Strömungsgeschwindigkeit der Luft erzeugt wird, die von innen nach außen zunimmt und durch geeignete Wahl des Öffnungsverhältnisses des Anströmbodens am Rande ihren Maximalwert erreicht. In einem anderen, aus der DD 124 008 bekannten Vorschlag hat der Anströmboden zonenförmig angeordnete und bezogen auf die Mittelachse der Wirbelschichtkammer geneigte Gasdurchtrittsöffnungen.

Der durch die Ausgestaltung des Anströmbodens hervorgerufene definierte Partikelumlauf wird außerdem durch die Lage des Auslasses für die fertigen Granulate beeinflußt. Um Störungen zu vermeiden, ist der Auslaß bei den Wirbelschichtapparaten nach der DD 119 304 und der DD 124 008 in der Mitte des Anströmbodens vorgesehen. Der Auslaß ist zweckmäßigerweise als senkrechtes Fallrohr ausgebildet, der gleichzeitig die Funktion eines Sichters hat. Dazu wird Sichterluft von unten in das Fallrohr eingeblasen. Der definierte Partikelumlauf in dem bekannten Verfahren zum gleichzeitigen Granulieren und Trocknen ermöglicht eine Verarbeitung temperaturempfindlicher Stoffe und Stoffgemische, denn der Partikelumlauf kann derart eingestellt werden, daß die Teilchen sich nur kurzzeitig durch die heißeren Bereiche in der Wirbelzone bewegen.

Das Verfahren eignet sich damit auch zur Herstellung von wasch- und reinigungsaktiven Tensidgranulaten aus einer in flüssiger bis pastöser Form vorliegenden Tensid-Zubereitungsform. Derartige Tensidgranulate und ihre Herstellung sind in der DE 41 27 323 A 1 ausführlich beschrieben.

Bei der Durchführung des Verfahrens entsprechend der DD 119 304 oder der DD 124 008 treten jedoch Probleme infolge der Produkteigenschaften der Tensidgranulate auf. Eine große Anzahl von Tensiden weist eine hohe Klebrigkeit sowohl bei niedrigen als auch bei hohen Trocknungstemperaturen auf. Eine bei niedrigen Temperaturen auftretende Klebrigkeit ist durch einen erhöhten Restwassergehalt bedingt. Bei höheren Temperaturen erweicht das Tensidgranulat trotz des höheren Trocknungsgrades, wird plastisch und schmilzt an der Granulatoberfläche. Beim Austrag der in der Wirbelschicht hergestellten Tensidgranulate durch das zentrale Fallrohr backen daher die Granulate an der Innenwand des Fallrohrs an, insbesondere in dessen oberen Bereich. Eine Brückenbildung im Fallrohr ist die Folge. Berühren die Granulate andererseits während ihres Falls die Wand, ohne anzubacken, so werden sie lokal überhitzt, oberflächlich aufgeschmolzen und verursachen Anbackungen in der Austragsschleuse.

Das Fallrohr wird zwar von kalter Sichterluft durchströmt, aber es führt durch die Heißgaszone unterhalb des Anströmbodens, so daß die Wandtemperatur des Rohres der Trocknungslufttemperatur entspricht. Diese liegt jedoch weit oberhalb der Schmelztemperatur der Granulate. Ein weiterer Nachteil liegt in der thermischen Zersetzung der die Wand des Fallrohrs berührenden Granulate und der damit einhergehenden Qualitätsverschlechterung des Produkts.

Eine Lösung dieser Probleme ist auf einfache Weise nicht zu erreichen. Eine Absenkung der Trocknungstemperaturen wäre unwirtschaftlich. Daß gleiche gilt für das Anbringen von Klopfern am Fallrohr. Auch ein zusätzliches Einblasen von Preßluft in das Fallrohr, um die Granulate im Abstand von der Fallrohrwand zu halten, ist nur mit einem hohen Aufwand möglich. Bei einer Absenkung der Temperatur im unteren Teil der Wirbelschichtkammer wäre die vollständige oder nahezu vollständige Trocknung der Granulate nicht mehr möglich. Auf jeden Fall wäre eine unerwünschte Einschränkung der Verfahrensparameter die Folge. Eine andere Alternative wäre das Einblasen von Pulver, um die Rieselfähigkeit der Granulate zu erhöhen. Damit ist aber eine Einschränkung des zu trocknenden Produktspektrums verbunden.

Der Erfindung liegt daher die Aufgabe zugrunde, die beim Austrag der fertigen Granulate entstehenden Probleme aufgrund deren Klebrigkeit bei erhöhter Temperatur mit nur geringem Aufwand zu vermeiden. Ein Nachrüsten bestehender Anlagen soll außerdem schnell und kostengünstig möglich sein.

Die Aufgabe wird erfindungsgemäß dadurch gelöst, daß man das Granulat durch einen gegenüber dem unteren Teil der Wirbelschichtklammer thermisch isolierten und/oder gekühlten Abzugsbereich und ein thermisch isoliertes und/oder gekühltes Fallrohr austrägt. Es wurde nämlich gefunden, daß eine thermische Isolierung des Fallrohrs ausreicht, um Anbackungen des Granulats im Fallrohr sowie das oberflächliche Aufschmelzen der Granulate bei Wandberührung weitgehend zu vermeiden. Eine Kühlung des Fallrohrmantels ist in der Regel nicht erforderlich, liegt aber auch im Rahmen der Erfindung. Dies gilt insbesondere, da das Fallrohr nicht nur als Austragsrohr für das Granulat, sondern auch als Sichter zur Größenklassierung dient. Dazu wird, wie bereits oben beschrieben worden ist, ein Strom von kaltem Trocknungsgas von unten nach oben in das Fallrohr eingeblasen und damit für eine Wärmeabfuhr im Bereich des Fallrohrs gesorgt.

Das Verfahren gemäß der Erfindung läßt sich auf die Herstellung sämtlicher bei erhöhter Temperatur klebriger Granulate anwenden. Vorzugsweise wird es auf die Herstellung von Tensidgranulaten angewendet. Es ist dabei nicht auf die Herstellung von Granulaten nur weniger Arten von Tensiden beschränkt, sondern rieselfähige Granulate von anionischen, nichtionischen, amphoteren, kationischen Tensiden und Mischungen aus diesen sind erfindungsgemäß herstellbar, wobei die Zusammensetzung der Granulate vorher bestimmt werden kann. Bevorzugt ist die Herstellung von Granulaten von Aniontensiden, insbesondere Fettalkylsulfaten, C9-C13-Alkylbenzolsulfonaten und Sulfofettsäuremethylestern, und/oder Niotensiden. Insbesondere enthält das eingesetzte Trocknungsgut flüssige ethoxylierte Fettalkohole mit 2 bis 8 Ethylenoxidgruppen pro Mol Alkohol. Weitere besonders geeignete Zusammensetzungen der zur Herstellung der Granulate eingesetzten Zubereitungsform sind in der DE 41 27 323 A1 genannt, auf die zum Ergänzen der Offenbarung ausdrücklich Bezug genommen wird. Hier sind besonders Zubereitungsformen aus einer nicht-tensidischen Flüssigkomponente und den obengenannten Tensiden bzw. Tensidgemischen bevorzugt.

Die thermische Isolierung des Fallrohrs kann auf unterschiedliche Weise vorgenommen werden. In einer Ausführungsform wird das Fallrohr mit einem Isolationswerkstoff umhüllt. In einer besonders bevorzugten Ausgestaltung der Erfindung verzichtet man jedoch auf die Verwendung von Isolationswerkstoff und läßt ein Gas, z. B. Luft, durch einen hohlen Außenmantel des Fallrohrs strömen. Das Gas dient zur thermischen Isolierung und/oder Kühlung des Fallrohrs gegenüber dem heißen unteren Bereich der Wirbelschichtkammer. Die Temperatur des Gases kann bei Normaltemperatur, also bei etwa 20°C, liegen oder auch darunter. In letzteren Fall dient das Gas gleichzeitig als Kühlmedium. In erster Linie sind jedoch die Isolationseigenschaften des Gases und nicht die Kühlwirkung entscheidend.

Die einen hohlen Außenmantel einsetzende Ausführungsform der Erfindung hat einen weiteren wichtigen Vorteil. Es läßt sich nämlich nicht vermeiden, daß Trocknungsgut in den unteren Teil der Wirbelschichtkammer eindringt und sich dort ablagert bzw. dort anbackt. Die Produktreste werden von Zeit zu Zeit durch Spülen mit Wasser entfernt. Wird das Fallrohr mit dem Außenmantel umhülllt und auf einen Isolationswerkstoff verzichtet, so treten bei dieser Reinigung keinerlei Probleme auf.

Vorzugsweise läßt man das Gas am oberen Ende des Außenmantels eintreten, um im oberen, besonders kritischen Bereich des Fallrohrs für eine ausreichende thermische Isolierung zu sorgen. In den Verfahren nach dem Stand der Technik treten die Anbackungen nämlich verstärkt im oberen Bereich des Fallrohrs auf.

Im Rahmen der Erfindung liegt es, wenn ein zusätzlicher Auslaß für das Gas vorgesehen ist. Dieser zusätzliche, bei der Umrüstung bestehender Anlagen anzubringende Auslaß ist in einer weiteren vorteilhaften Ausgestaltung der Erfindung jedoch nicht notwendig, wenn das Gas aus dem Trocknungsgas besteht und wenn man das Gas aus dem Außenmantel unmittelbar in den unteren Teil der Wirbelschichtkammer, insbesondere in dessen untersten Bereich, austreten läßt. Das gegenüber dem typischerweise etwa 200 °C heißen Trocknungsgas kalte Spülgas von etwa 20 °C wird damit zusammen mit dem Trocknungsgas aus der Wirbelschichtapparatur ausgetragen. Das Spülgas, das in der Regel ebenso wie das Trocknungsgas aus Luft besteht, stört infolge der relativ geringen Menge gegenüber der Trocknungsluft nicht die Durchführung des Verfahrens und führt zu keinen Einschränkungen weder bei den Verfahrensparametern noch im zu verarbeitenden Produktspektrum. Besonders gering ist die Beeinflussung des Trocknungs- und Granulierverfahrens, wenn die Spülluft in möglichst großem Abstand zum Anströmboden , also im untersten Bereich der Wirbelschichtkammer austritt.

Die Erfindung betrifft ferner eine Vorrichtung zum Durchfuhren des bisher beschriebenen Verfahrens. Die Merkmale der Vorrichtung sowie die besonders bevorzugten Merkmale sind in den entsprechenden Ansprüchen genannt. Die Vorteile sind bereits oben genannt worden.

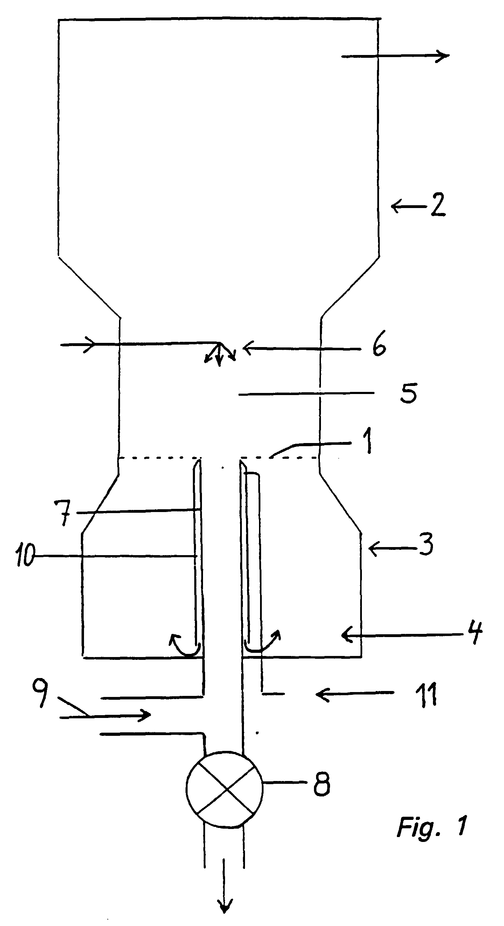

Im folgenden wird ein Ausführungsbeispiel der Erfindung anhand von Zeichnungen näher erläutert. Es zeigt
- Figur 1: eine schematische Darstellung einer Wirbelschichtapparatur, die entsprechend der Erfindung umgerüstet worden ist.

Die in Figur 1 dargestellte, zylindersymmetrische Apparatur hat eine Wirbelschichtkammer, die durch einen Anströmboden 1 in einen oberen Teil 2 und einen unteren Teil 3 unterteilt ist. Die Aggregate zum Zuführen der flüssigen bis pastösen Zubereitung sowie der Trocknungs-, Spül- und Sichterluft sowie zum Austrag des Produkts und zum Reinigen der Abluft sind der Übersichtlichkeit halber nicht eingezeichnet.

Die auf etwa 200 °C erhitzte Trocknungsluft 4 strömt in den unteren Teil 3 der Wirbelschichtkammer ein und erzeugt oberhalb des Anströmbodens 1 eine Wirbelschicht 5. Hier herrschen Temperaturen von etwa 70 °C. Nur knapp oberhalb des Anströmbodens 1 befindet sich eine relativ heiße Zone mit der Temperatur der eintretende Trocknungsluft. Eine spezielle Ausgestaltung des Anströmbodens 1, die nicht Gegenstand dieser Erfindung ist, sorgt für einen definierten Partikelumlauf, so daß sich die Teilchen nach jeder Passage durch den Heißgasbereich relativ lange in kühleren Bereichen der Wirbelschicht aufhalten und damit trotz ihrer Temperaturempfindlichkeit thermisch nicht geschädigt werden. Die flüssige bis pastöse Zubereitungsform, im vorliegenden Ausführungsbeispiel eine 65%ige wäßrige Paste, wird über ein Düsensystem 6 auf die Wirbelschicht aufgesprüht .

Das fertige Produkt wird über ein Fallrohr 7 und eine Zellradschleuse 8 ausgetragen. Zur Korngrößenklassierung läßt man Sichterluft 9 mit einer Temperatur von etwa 20 °C von unten in das Fallrohr 7 eintreten.

Zur thermischen Isolierung ist das Fallrohr 7 von einem ebenfalls zylindrischen Mantel 10 umgeben, an dessem oberen, geschlossenen Ende die Spülluft 11 mit etwa 20 °C eingespeist wird. Die zur thermischen Isolierung des Fallrohrs 7 gegenüber dem heißen unteren Teil 3 der Wirbelschichtkammer dienende Spülluft tritt am unteren, offenen Ende des Mantels 10 in den unteren Teil der Wirbelschichtkammer aus. Ein zusätzlicher Luftauslaß für die Spülluft ist daher nicht erforderlich. Alternativ zu der in Figur 1 gezeigten Anordnung kann die Spülluft durch eine innerhalb des Mantels 10 verlegte Rohrleitung zugeführt werden, so daß ein Aufheizen der Spülluft während der Zuführung zum oberen, geschlossenen Ende des Mantels 10 weitgehend vermieden wird. Die Trocknungsluft wird zusammen mit der Spülluft im oberen Bereich des oberen Teils 2 der Wirbelschichtkammer über einen Auslaß 12 abgeführt und von mitgeführtem Staub in einer nicht dargestellten Gasreinigungsvorrichtung, z. B. einem Zyklon gereinigt.

### Bezugszeichenliste

- 1: Anströmboden
- 2: oberer Teil
- 3: unterer Teil
- 4: Trocknungsluft
- 5: Wirbelschicht
- 6: Düsensystem
- 7: Fallrohr
- 8: Zellradschleuse
- 9: Sichterluft
- 10: Mantel
- 11: Gas, Spülluft

## Patentansprüche

1. Verfahren zum Herstellen von bei erhöhter Temperatur zur Klebrigkeit neigenden Granulaten, insbesondere von wasch- und reinigungsaktiven Tensidgranulaten, aus einer unter Normalbedingungen flüssigen bis pastösen Zubereitungsform durch gleichzeitiges Granulieren und Trocknen in einer von einem Trocknungsgas (4) erhöhter Temperatur von unten angeströmten Wirbelschicht (5), die sich im oberen Teil (2) einer durch einen Anströmboden (1) zweigeteilten Wirbelschichtkammer befindet, in dessen unteren Teil (3) das Trocknungsgas (4) zugeführt wird, wobei man das Granulat durch ein durch den unteren Teil (3) der Wirbelschichtkammer geführtes Fallrohr (7) aus der Wirbelschicht (5) austrägt,
**dadurch gekennzeichnet**,
daß man das Granulat durch ein gegenüber dem unteren Teil (3) der Wirbelschichtkammer thermisch isoliertes und/oder gekühltes Fallrohr (7) austrägt.

2. Verfahren nach Anspruch 1,
**dadurch gekennzeichnet**,
daß die Zubereitungsform eine nicht-tensidische Flüssigkomponente und Tenside bzw. Tensidgemische aus der Gruppe der anionischen, nichtionischen, amphoteren und kationischen Tenside enthält.

3. Verfahren nach Anspruch 2,
**dadurch gekennzeichnet**,
daß die Zubereitungsform Aniontenside, insbesondere Fettalkylsulfate, C9-C13-Alkylbenzolsulfonate und Sulfofettsäuremethylester, und/oder Niotenside, insbesondere flüssige ethoxylierte Fettalkohole mit 2 bis 8 Ethylenoxidgruppen pro Mol Alkohol enthält.

4. Verfahren nach einem der Ansprüche 1 bis 3,
**dadurch gekennzeichnet**,
daß das Fallrohr (7) mit einem Isolationswerkstoff umhüllt ist.

5. Verfahren nach einem der Ansprüche 1 bis 3,
**dadurch gekennzeichnet**,
daß man ein Gas (11) durch einen hohlen Außenmantel (10) des Fallrohrs strömen läßt.

6. Verfahren nach Anspruch 5,
**dadurch gekennzeichnet**,
daß man das Gas (11) am oberen Ende des Außenmantels (10) eintreten laßt.

7. Verfahren nach Anspruch 5 oder Anspruch 6,
**dadurch gekennzeichnet**,
daß das Gas (11) aus dem Trocknungsgas besteht und daß man das Gas (11) aus dem Außenmantel (10) unmittelbar in den unteren Teil (3) der Wirbelschichtkammer, insbesondere in dessen untersten Bereich, austreten läßt.

8. Vorrichtung zum Durchführen des Verfahrens nach einem der vorhergehenden Ansprüche, mit einer durch einen Anströmboden (1) in einen oberen (2) und einen unteren Teil (3) geteilten Wirbelschichtkammer, einem Einlaß im unteren Teil (3) für das Trocknungsgas (4), einem durch den unteren Teil (3) nach außen geführten Fallrohr (7) zum Austrag des Granulats,
**dadurch gekennzeichnet**,
daß das Fallrohr (7) gegenüber dem unteren Teil (3) der Wirbelschichtkammer thermisch isoliert und/oder gekühlt ist.

9. Vorrichtung nach Anspruch 8,
**dadurch gekennzeichnet**,
daß das Fallrohr (7) mit einem Isolationswerkstoff umhüllt ist.

10. Vorrichtung nach Anspruch 8,
**gekennzeichnet durch**
einen einen Einlaß für ein Isolationsgas bzw. Kühlgas (11) aufweisenden, hohlen Außenmantel (10) des Fallrohrs (7).

11. Vorrichtung nach Anspruch 10,
**dadurch gekennzeichnet**,
daß der Einlaß für das Gas (11) am oberen Ende des Außenmantels (10) angeordnet ist.

12. Vorrichtung nach Anspruch 10 oder 11,
**dadurch gekennzeichnet**,
daß der Außenmantel (10) einen Auslaß unmittelbar in den unteren Teil der Wirbelschichtkammer, insbesondere in dessen untersten Bereich aufweist.

## Claims

1. A process for the production of granules with a tendency to become tacky at elevated temperature, more especially washing- and cleaning-active surfactant granules, from a compound which is liquid to paste-like under normal conditions by simultaneous granulation and drying in a fluidized bed (5) into which a drying gas (4) at elevated temperature flows from beneath and which is disposed in the upper part (2) of a fluidized bed chamber divided by a diffusor plate (1), the drying gas (4) being delivered to the lower part (3) of the fluidized bed chamber and the granules being discharged from the fluidized (5) through a downpipe extending through the lower part (3) of the fluidized bed chamber, characterized in that the granules are discharged through a downpipe (7) which is thermally insulated from the lower part (3) of the fluidized bed chamber and/or cooled.

2. A process as claimed in claim 1, characterized in that the compound contains a non-surface-active liquid component and surfactants or surfactant mixtures from the group of anionic, nonionic, amphoteric and cationic surfactants.

3. A process as claimed in claim 2, characterized in that the compound contains anionic surfactants, more especially fatty alkyl sulfates, C₉₋₁₃ alkyl benzenesulfonates and sulfofatty acid methyl esters, and/or nonionic surfactants, more especially liquid ethoxylated fatty alcohols containing 2 to 8 ethylene oxide groups per mol alcohol.

4. A process as claimed in any of claims 1 to 3, characterized in that the downpipe (7) is wrapped in an insulating material.

5. A process as claimed in any of claims 1 to 3, characterized in that a gas (11) is allowed to flow through a hollow outer jacket (10) of the downpipe.

6. A process as claimed in claim 5, characterized in that the gas (11) enters at the upper end of the outer jacket (10).

7. A process as claimed in claim 5 or 6, characterized in that the gas (11) consists of the drying gas and in that the gas (11) flows out of the outer jacket (10) directly into the lower part (3) of the fluidized bed chamber, more especially into the lowermost region thereof.

8. An arrangement for carrying out the process claimed in any of the preceding claims comprising a fluidized bed chamber divided by a diffusor (1) into an upper part (2) and a lower part (3), an inlet in the lower part (3) for the drying gas (4) and a downpipe (7) extending outwards through the lower part (3) for discharging the granules, characterized in that the downpipe (7) is thermally insulated from the lower part (3) of the fluidized bed compartment and/or cooled.

9. An arrangement as claimed in claim 8, characterized in that the downpipe (7) is wrapped in an insulating material.

10. An arrangement as claimed in claim 8, characterized by a hollow outer jacket (10) of the downpipe (7) comprising an inlet for an insulating gas or cooling gas (11).

11. An arrangement as claimed in claim 10, characterized in that the inlet for the gas (11) is located at the upper end of the outer jacket (10).

12. An arrangement as claimed in claim 10 or 11, characterized in that the outer jacket (1) has an outlet opening directly into the lower part of the fluidized bed chamber, more especially into the lowermost region thereof.

## Revendications

1. Procédé de production de granulés ayant tendance à s'agglutiner à température accrue, en particulier de granulés tensioactifs à activité détergente et nettoyante, à partir d'une préparation liquide à pâteuse dans les conditions normales, par granulation et séchage simultanés dans un lit fluidisé (5) balayé par le bas par un gaz de séchage (4) à température accrue, lequel lit fluidisé se trouve dans la partie supérieure (2) d'une chambre à lit fluidisé séparée en deux par un fond de balayage (1), dans la partie inférieure (3) de laquelle, le gaz de séchage (4) est acheminé, le granulé étant déchargé du lit fluidisé (5) par un tuyau de décharge (7) passant par la partie inférieure (3) de la chambre à lit fluidisé, caractérisé en ce que l'on décharge le granulé par un tuyau de décharge (7) thermiquement isolé et/ou refroidi par rapport à la partie inférieure (3) de la chambre à lit fluidisé.

2. Procédé selon la revendication 1, caractérisé en ce que la préparation renferme un composant liquide non tensioactif et des surfactifs ou des mélanges de surfactifs appartenant au groupe des tensioactifs anioniques, non ioniques, amphotères et cationiques.

3. Procédé selon la revendication 2, caractérisé en ce que la préparation renferme des surfactifs anioniques, en particulier des alkylsulfates gras, des alkyl(en C₉-C₁₃)benzènesulfonates et des esters méthyliques d'acides gras sulfoniques, et/ou des surfactifs non ioniques, en particulier des alcools gras éthoxylés liquides avec 2 à 8 groupes d'oxyde d'éthyléne par mol d'alcool.

4. Procédé selon une des revendications 1 à 3, caractérisé en ce que le tuyau de décharge (7) est enveloppé d'un matériau isolant.

5. Procédé selon une des revendications 1 à 3, caractérisé en ce que l'on fait circuler un gaz (11) par une enveloppe creuse (10) du tuyau de décharge.

6. Procédé selon la revendication 5, caractérisé en ce que l'on fait pénétrer le gaz (11) à l'extrémité supérieure de l'enveloppe (10).

7. Procédé selon la revendication 5 ou 6, caractérisé en ce que le gaz (11) est constitué du gaz de séchage et que l'on fait sortir le gaz (11) de l'enveloppe (10) directement dans la partie inférieure (3) de la chambre à lit fluidisé, en particulier dans sa zone la plus basse.

8. Dispositif pour la réalisation du procédé selon une des revendications qui précèdent, comportant une chambre à lit fluidisé séparée par un fond de balayage (1) en une partie supérieure (2) et en une partie inférieure (3), une entrée dans la partié inférieure (3) pour le gaz de séchage (4), un tuyau de décharge (7) conduisant vers l'extérieur à travers la partie inférieure (3) pour le déchargement du granulé, caractérisé en ce que le tuyau de décharge (7) est thermiquement isolé et/ou refroidi par rapport à la partie inférieure (3) de la chambre à lit fluidisé.

9. Dispositif selon la revendication 8, caractérisé en ce que le tuyau de décharge (7) est enveloppé d'un matériau isolant.

10. Dispositif selon la revendication 8, caractérisé par une enveloppe creuse (10) du tuyau de décharge (7), présentant une entrée pour un gaz isolant ou un gaz de refroidissement (11).

11. Dispositif selon la revendication 10, caractérisé en ce que l'entrée pour le gaz (11) est disposée à l'extrémité supérieure de l'enveloppe creuse (10).

12. Dispositif selon la revendication 10 ou 11, caractérisé en ce que l'enveloppe creuse (10) présente une sortie directement dans la partie inférieure de la chambre à lit fluidisé, *en particulier dans sa zone la plus basse.
